# EUROPÄISCHE PATENTSCHRIFT

(11) **EP 1 553 054 B1**
(45) Veröffentlichungstag und Bekanntmachung des Hinweises auf die Patenterteilung: **29.10.2008**
(21) Anmeldenummer: 04028666.8
(22) Anmeldetag: 03.12.2004
(51) Int. Cl.: C01G 23/00, C01G 23/07, C09C 1/36

(54) **Flammenhydrolytisch hergestelltes Silicium-Titan-Mischoxidpulver**
Silicon-titanium mixed-oxide powder prepared by flame hydrolysis
Poudre d'oxyde mixte silicium-titane préparé par hydrolyse à la flamme

(30) Priorität: 10.01.2004 DE 102004001520
(43) Veröffentlichungstag der Anmeldung: 13.07.2005
(73) Patentinhaber: Evonik Degussa GmbH, 45128 Essen (DE)
(72) Erfinder: Schumacher, Kai, Dr., 65719 Hofheim (DE); Mörters, Martin, Dr., 79618 Rheinfelden (DE); Klotz, Oswin, 63825 Westerngrund (DE); Diener, Uwe, 63538 Grosskrotzenburg (DE)

(56) Entgegenhaltungen:
- US-A- 5 762 914
- US-A1- 2003 129 153
- US-A1- 2003 134 128

## Beschreibung

Die vorliegende Erfindung betrifft ein flammenhydrolytisch hergestelltes Silicium-Titan-Mischoxidpulver, dessen Herstellung und Verwendung.

Es ist bekannt Silicium-Titan-Mischoxidpulver flammenhydrolytisch herzustellen. Hierbei wird in der Regel ein Gemisch aus Siliciumtetrachlorid und Titantetrachlorid in einer Flamme hydrolysiert. Die Flamme kann beispielsweise durch Reaktion von Wasserstoff und Luftsauerstoff erzeugt werden. Hierbei entsteht das zur Hydrolyse der Chloride notwendige Wasser. Als Reaktionsprodukte erhält man das Silicium-Titan-Mischoxidpulver und Salzsäure, die teilweise dem Pulver noch anhaftet.

Bei denen im Stand der Technik beschriebenen Verfahren resultieren jedoch nur Pulver mit eingeschränktem TiO₂/SiO₂-Verhältnis.

So wird in DE-A-2931810 ein Silicium-Titan-Mischoxidpulver beansprucht, welches 0,1 bis 9,9 Gew.-% Titandioxid enthält. Es wird hergestellt indem man Siliciumtetrachlorid verdampft, mit vorgewärmter Luft verdünnt und in einer Mischkammer mit Wasserstoff und Titantetrachlorid vermischt und das Gemisch in einer Reaktionskammer verbrennt.

In DE-A-4235996 wird ein Silicium-Titan-Mischoxidpulver beansprucht, welches 70 bis 99 Gew.-% Titandioxid enthält. Es wird hergestellt, indem man Siliciumtetrachlorid verdampft und mittels eines Inertgases in eine Mischkammer überführt, dort mit Wasserstoff, Luft und Titantetrachlorid mischt und das Gemisch in einer Reaktionskammer verbrennt.

Es wurde gefunden, dass mit den beiden vorgenannten Verfahren es nicht möglich ist, ein Silicium-Titan-Mischoxidpulver außerhalb der angegebenen Grenzen von Titandioxid zu erhalten. Bei diesen Versuchen wurden oft dunkel gefärbte Verunreinigungen und gröbere Partikel gebildet.

Aufgabe der Erfindung ist es ein Silicium-Titan-Mischoxidpulver bereitzustellen, welches gegenüber dem Stand der Technik einen höheren Anteil von Siliciumdioxid beziehungsweise Titandioxid aufweist. Insbesondere soll das Mischoxidpulver frei von dunkel gefärbten Verunreinigungen sein. Ein weiterer Gegenstand der Erfindung ist ein Verfahren zur Herstellung dieser Silicium-Titan-Mischoxidpulver.

Gegenstand der Erfindung ist ein Verfahren zur Herstellung eines flammenhydrolytisch hergestelltes Silicium-Titan-Mischoxidpulver, welches aus Aggregaten von Primärpartikeln besteht, und bei dem
- die Primärpartikel aus amorphem Siliciumdioxid, kristallinem Titandioxid oder Silicium-Titan-Mischoxid mit einem amorphem Siliciumdioxid- und einem kristallinen Titandioxidanteil bestehen, wobei Silicium-Titan-Mischoxidprimärpartikel überwiegen,
- das Pulver eine BET-Oberfläche zwischen 20 und 200 m²/g, einen Titandioxid-Anteil von 40-60 Gew.-%, und ein Röntgendiffraktogramm die Beugungsmuster von Rutil und Anatas aufweist, wobei das Verhältnis Rutil/Anatas 2:98 bis 98:2 ist, bei dem man
- ein Siliciumhalogenid und ein Titanhalogenid, bevorzugt Titantetrachlorid, in einem derartigen Verhältnis verdampft, dass das entsprechend zusammengesetzte Silicium-Titan-Mischoxidpulver resultiert, die Dämpfe mittels eines Traggases, gemischt oder getrennt, in eine Mischkammer überführt,
   - wobei die Verdampfungstemperatur kleiner als 180°C ist und
- getrennt hiervon Wasserstoff, Primärluft, die ggf. mit Sauerstoff angereichert und/oder vorerhitzt sein kann, in die Mischkammer überführt,
- anschließend das Gemisch aus den Dämpfen von Siliciumhalogenid und Titanhalogenid, Wasserstoff und Primärluft in einem Brenner zündet und die Flamme in eine von der Umgebungsluft abgeschlossene Reaktionskammer hinein verbrennt,
- zusätzlich Sekundärluft in die Reaktionskammer einbringt, wobei das Verhältnis Primärluft/Sekundärluft zwischen 10 und 0,25 liegt,
- anschließend den Feststoff von gasförmigen Stoffen abtrennt, und
- nachfolgend den Feststoff durch eine Behandlung mit Wasserdampf bei Temperaturen von 250 bis 700°C von halogenidhaltigen Substanzen weitestgehend befreit.

Die Primärpartikel sind die in der Flammenhydrolyse zuerst gebildeten Partikel. Im erfindungsgemäßen Pulver liegen die Primärpartikel als amorphe Siliciumdioxid-, kristalline Titandioxid und Silicium-Titan-Mischoxid-Primärpartikel vor. Der amorphe bzw. kristalline Zustand läßt sich beispielsweise durch hochauflösende TEM-Aufnahmen bestimmen, auf denen die Gitternetzebenen der kristallinen Anteile zu erkennen sind.

Unter Silicium-Titan-Mischoxid-Primärpartikeln sind solche zu verstehen, die in hochauflösenden TEM-Aufnahmen Bereiche von amorphem Siliciumdioxid und kristallinem Titandioxid aufweisen. Diese überwiegen in dem erfindungsgemäßen Mischoxidpulver, was bedeutet, dass durch Auszählung der Primärpartikel aus TEM-Aufnahmen mindestens 80%, in der Regel mehr als 95% der Primärpartikel Silicium-Titan-Mischoxid-Primärpartikel sind. Die Primärpartikel verwachsen während der Reaktion durch Sinterung zu Aggregaten. Die Aggregate können im weiteren Reaktionsverlauf Agglomerate bilden.

Ein weiterer gegenstand der Erfindung ist ein flammenhydrolytisch hergestelltes Silicium-Titan-Mischoxidpulver, welches nach dem erfindungsgemäßen Verfahren erhältlich ist.

Im Röntgendiffraktogramm erscheinen die Beugungsmuster von Rutil und Anatas auf. Es werden keine Anteile von kristallinem Silciumdioxid oder Titansilikaten detektiert.

Das Verhältnis Rutil/Anatas beträgt im erfindungsgemäßen Pulver 2:98 bis 98:2. Bevorzugt kann das Rutil-Anatas-Verhältnis zwischen 80:20 und 95:5 liegen.

Bevorzugt kann ein erfindungsgemäßes Mischoxidpulver mit einer BET-Oberfläche von 80 bis 130 m²/g sein.

Weiterhin kann das erfindungsgemäße Mischoxidpulver eine Stampfdichte von 20 bis 140 g/l aufweisen, wobei Werte von 30 bis 70 g/l besonders bevorzugt sein können.

Weiterhin kann das erfindungsgemäße Mischoxidpulver einen Chloridgehalt aufweisen, der kleiner 0,5 Gew.-% ist.

In einer bevorzugten Ausführungsform kann die Verdampfungstemperatur kleiner als 160°C sein.

Bevorzugt können Siliciumtetrachlorid, Methlytrichlorsilan und/oder Trichlorsilan als Siliciumhalogenide eingesetzt werden.

Weiterhin kann es vorteilhaft sein, wenn die Austrittsgeschwindigkeit des Reaktionsgemisches aus dem Brenner in den Reaktionsraum zwischen 10 und 80 m/s beträgt.

Ebenso ist es möglich zusätzlich bis zu 25 g Wasserdampf /m³ Primärluft in die Mischkammer einzuführen.

Besonders bevorzugt kann ein Chloridgehalt von kleiner 0,3 Gew.-% sein.

Ein weiterer Gegenstand der Erfindung ist die Verwendung des erfindungsgemäßen Mischoxidpulvers in Tonermischungen, in kosmetischen Zubereitungen, insbesondere in Sonnenschutzmitteln, als Katalysator, als Katalysatorträger und als Photokatalysator.

### Beispiele:

### Analytik:

Die BET-Oberfläche wird nach DIN 66131 bestimmt.

Der Gehalt an SiO₂ und TiO₂ wird durch Röntgenfluoreszenz-Analyse bestimmt.

Die Stampfdichte wird in Anlehnung an DIN ISO 787/XI K 5101/18 (nicht gesiebt) bestimmt.

Der pH-Wert wird in Anlehnung an DIN ISO 787/IX, ASTM D 1280, JIS K 5101/24 bestimmt.

Bestimmung des Chlorid-Gehaltes: Ca. 0,3 g der erfindungsgemäßen Partikel werden genau eingewogen, mit 20 ml 20 prozentiger Natronlauge p.a. versetzt, gelöst und unter Rühren in 15 ml gekühlte HNO₃ überführt. Der Chlorid-Anteil in der Lösung wird mit AgNO₃-Lösung (0,1 mol/l oder 0,01 mol/l) titriert.
Beispiel 1 (gemäß Erfindung):
   3,24 kg/h Siliciumtetrachlorid und 2,70 kg/h Titantetrachlorid werden gemeinsam in einem Verdampfer bei 160°C verdampft. Die Dämpfe werden mittels 15 Nm³/h Stickstoff als Traggas in eine Mischkammer überführt. Getrennt hiervon werden 2,97 Nm³/h Wasserstoff und 13,3 Nm³/h Primärluft in die Mischkammer eingebracht. In einem Zentralrohr wird das Reaktionsgemisch einem Brenner zugeführt und gezündet. Dabei brennt die Flamme in ein wassergekühltes Flammrohr. Zusätzlich werden in den Reaktionsraum 20 Nm³/h Sekundärluft eingebracht. Das entstandene Pulver wird in einem nachgeschalteten Filter abgeschieden und anschließend im Gegenstrom mit Wasserdampf bei 520°C behandelt.
Beispiel 2 (gemäß Erfindung) wird wie Beispiel 1 durchgeführt, jedoch mit geänderten Mengen an Siliciumtetrachlorid und Titantetrachlorid, die zusätzlich getrennt verdampft werden.
Die Beispiele 3 bis 11 (gemäß Erfindung) werden analog Beispiel 1 durchgeführt, wobei die jeweiligen Versuchseinstellungen der Tabelle zu entnehmen sind. In Beispiel 11 wird Methyltrichlorsilan anstelle von Siliciumtetrachlorid eingesetzt.
Die Beispiele 12 und 13 (gemäß Erfindung) werden wie Beispiel 2 durchgeführt, jedoch wird zusätzlich Wasserdampf in die Mischkammer eingebracht.
Die Beispiele 14 und 15 (Vergleichsbeispiele) werden wie Beispiel 1 durchgeführt, jedoch bei höheren Verdampfungstemperaturen. Die Pulver zeigen dunkle gefärbte Partikel.
Beispiel 16 (Vergleichsbeispiel) wird wie Beispiel 1 durchgeführt, jedoch ohne Sekundärluft. Das Pulver enthält grobe Partikel.

Die Verfahrensparameter und die Stoffparameter der erfindungsgemäßen Beispiele und der Vergleichsbeispiele sind in der Tabelle zusämmengefasst.

**Tabelle**

| | **Verfahrensparameter** | | | | | | | | **Stoffparameter** | | | | | |
|---|---|---|---|---|---|---|---|---|---|---|---|---|---|---|
| Beispiel | SiCl₄ | TiCl₄ | T_{Verd} (5) | H₂ | Prim.-luft | Sek.-luft | V_{B} (6) | T_{Ent} (7) | BET | SiO₂/ (3) TiO₂⁽³⁾ | Rutil/ Anatas | pH | Stampf-dichte | Chlorid |
| | kg/h | kg/h | °C | m³/h | m³/h | m³/h | m/s | °C | m²/g | Gew.-% | | | g/l | Gew.-% |
| 1 | 3,24 | 2,70 | 160 | 2,97 | 13,30 | 20,00 | 36,0 | 520 | 117 | 45/55 | 5/95 | 3,6 | 47 | 0,10 |
| 2 | 3,60 | 3,00 | 160 | 2,50 | 9,70 | 20,00 | 26,9 | 520 | 79 | 47/53 | 15/85 | 3,6 | 53 | 0,16 |
| 3 | 3,60 | 2,85 | 160 | 2,50 | 9,80 | 20,00 | 27,9 | 350 | 88 | 48/52 | 10/90 | 3,5 | 66 | 0,30 |
| 4 | 3,60 | 3,00 | 160 | 3,30 | 13,30 | 20,00 | 36,9 | 520 | 100 | 50/50 | 9/91 | 3,7 | 48 | 0,20 |
| 5 | 3,60 | 3,00 | 160 | 2,40 | 11,80 | 20,00 | 31,5 | 350 | 125 | 47/53 | 4/96 | 3,5 | 42 | 0,48 |
| 6 | 3,90 | 2,80 | 160 | 2,50 | 11,50 | 20,00 | 31,5 | 400 | 130 | 56/44 | 4/96 | 3,8 | 46 | 0,26 |
| 7 | 4,00 | 2,70 | 160 | 2,50 | 9,60 | 20,00 | 27,1 | 400 | 92 | 55/45 | 11/89 | 3,8 | 47 | 0,08 |
| 8 | 4,00 | 2,70 | 160 | 2,50 | 11,60 | 20,00 | 31,7 | 450 | 130 | 56/44 | 9/91 | 3,6 | 43 | 0,13 |
| 9 | 3,90 | 2,80 | 160 | 2,50 | 13,5 | 25,00 | 41,0 | 650 | 188 | 58/42 | 3/97 | 4,0 | 135 | 0,39 |
| 10 | 3,60 | 3,00 | 160 | 2,50 | 7,80 | 2,00 | 21,0 | 450 | 43 | 51/49 | 8/92 | 3,6 | 61 | 0,09 |
| 11⁽¹⁾ | 3,90 | 2,80 | 160 | 1,20 | 14,0 | 20,00 | 29,0 | 450 | 112 | 58/42 | 8/92 | 3,7 | 54 | 0,21 |
| 12⁽²⁾ | 3,60 | 3,00 | 160 | 3,30 | 13,30 | 20,00 | 36,9 | 450 | 83 | 48/52 | 14/86 | 3,9 | 51 | 0,25 |
| 13⁽²⁾ | 4,00 | 2,70 | 160 | 2,50 | 9,70 | 20,00 | 27,3 | 450 | 93 | 54/46 | 13/87 | 3,0 | 52 | 0,30 |
| 14⁽⁴⁾ | 3,24 | 2,70 | 205 | 2,97 | 13,30 | 20,00 | 36,0 | 520 | 112 | 45/55 | 5/95 | 3,5 | 50 | 0,23 |
| 15⁽⁴⁾ | 3,60 | 2,85 | 230 | 2,50 | 9,80 | 20,00 | 27,9 | 350 | 91 | 48/52 | 10/90 | 3,7 | 59 | 0,40 |
| 16⁽⁴⁾ | 2,94 | 0,47 | 160 | 2,80 | 8,20 | 0,00 | 0,00 | 650 | 43 | 83/17 | 31/69 | 3,5 | 68 | 0,21 |

| | | | | | | | | | | | | | | |
|---|---|---|---|---|---|---|---|---|---|---|---|---|---|---|
| (1) Methyltrichlorsilan anstelle von SiCl₄; (2) zusätzlich Wasserdampf in Mischkammer: Bspl. 14: 10 g/m³ Primärluft, Bspl. 15: 20 g/m³ Primärluft ; (3) Einheitlichkeit der Pulverzusammensetzung bestimmt durch 5 willkürlich gezogene Proben eines Pulvers; (4) Vergleichsbeispiel; (5) T_{verd} = Verdampfungstemperatur; (6) V_{B} = Austrittgeschwindingkeit aus Brenner; (7) T_{Ent} = Entsäuerungstemperatur | | | | | | | | | | | | | | |

## Patentansprüche

1. Verfahren zur Herstellung eines Silicium-Titan-Mischoxidpulver welches aus Aggregaten von Primärpartikeln besteht und bei dem
- die Primärpartikel aus amorphem Siliciumdioxid, kristallinem Titandioxid oder Silicium-Titan-Mischoxid mit einem amorphem Siliciumdioxid- und einem kristallinen Titandioxidanteil bestehen, wobei Silicium-Titan-Mischoxidprimärpartikel überwiegen,
- das Pulver eine BET-Oberfläche zwischen 20 und 200 m²/g, einen Titandioxid-Anteil von 40-60 Gew.%, und ein Röntgendiffraktogramm die Beugungsmuster von Rutil und Anatas aufweist, wobei das Verhältnis Rutil/Anatas 2:98 bis 98:2 ist.
**dadurch gekennzeichnet, dass** man
- ein Siliciumhalogenid und ein Titanhalogenid, bevorzugt Titantetrachlorid, in einem derartigen Verhältnis verdampft, dass das entsptrechend zusammengesetzte Silicium-Titan-Mischoxidpulver resultiert, die Dämpfe mittels eines Traggases, gemischt oder getrennt, in eine Mischkammer überführt,
- wobei die Verdampfungstemperatur kleiner als 180°C ist und
- getrennt hiervon Wasserstoff, Primärluft, die ggf. mit Sauerstoff angereichert und/oder vorerhitzt sein kann, in die Mischkammer überführt,
- anschließend das Gemisch aus den Dämpfen von Siliciumhalogenid und Titanhalogenid Wasserstoff und Primärluft in einem Brenner zündet und die Flamme in eine von der Umgebungsluft abgeschlossene Reaktionskammer hinein verbrennt,
- zusätzlich Sekundärluft in die Reaktionskammer einbringt, wobei das Verhältnis Primärluft/Sekundärluft zwischen 10 und 0,25 liegt,
- anschließend den Feststoff von gasförmigen Stoffen abtrennt, und
- nachfolgend den Feststoff durch eine Behandlung mit Wasserdampf bei Temperaturen von 250 bis 700°C von halogenidhaltigen Substanzen weitestgehend befreit.

2. Verfahren nach Anspruch 1, **dadurch gekennzeichnet, dass** die Verdampfungstemperatur kleiner als 160°C ist.

3. Verfahren nach den Ansprüchen 1 oder 2, **dadurch gekennzeichnet, dass** als Siliciumhalogenide Siliciumtetrachlorid, Methlytrichlorsilan und/oder Trichlorsilan eingesetzt werden.

4. Verfahren nach den Ansprüchen 1 bis 3, **dadurch gekennzeichnet, dass** die Austrittsgeschwindigkeit des Reaktionsgemisches aus dem Brenner in den Reaktionsraum zwischen 10 und 80 m/s beträgt.

5. Verfahren nach den Ansprüchen 1 bis 4, **dadurch gekennzeichnet, dass** zusätzlich bis zu 25 g Wasserdampf /m³ Primärluft in die Mischkammer eingeführt wird.

6. Flammenhydrolytisch hergestelltes Silicium-Titan-Mischoxidpulver erhältlich nach dem Verfahren gemäß der Ansprüche 1 bis 5.

7. Flammenhydrolytisch hergestelltes Silicium-Titan-Mischoxidpulver nach Anspruch 6, **dadurch gekennzeichnet, dass** die BET-Oberfläche zwischen 80 und 130 m²/g liegt.

8. Flammenhydrolytisch hergestelltes Silicium-Titan-Mischoxidpulver nach den Ansprüchen 6 oder 7 **dadurch gekennzeichnet, dass** der Chloridgehalt kleiner 0,5 Gew.-% ist.

9. Flammenhydrolytisch hergestelltes Silicium-Titan-Mischoxidpulver nach den Ansprüchen 6 bis 8, **dadurch gekennzeichnet, dass** die Stampfdichte 20 bis 140 g/l beträgt.

10. Verwendung des flammenhydrolytisch hergestellten Silicium-Titan-Mischoxidpulvers gemäß den Ansprüchen 6 bis 9 in Tonermischungen, in kosmetischen Zubereitungen, insbesondere in Sonnenschutzmitteln, als Katalysator, als Katalysatorträger und als Photokatalysator.

## Claims

1. Process for producing a silicon-titanium mixed oxide powder which consists of aggregates of primary particles and where
- the primary particles consist of amorphous silicon dioxide, crystalline titanium dioxide or silicon titanium mixed oxide having an amorphous silicon dioxide fraction and a crystalline titanium dioxide fraction, wherein silicon-titanium mixed oxide primary particles predominate,
- the powder has a BET surface area between 20 and 200 m²/g, a titanium dioxide fraction of 40-60 wt.% and an X-ray diffractogram exhibits the diffraction pattern of rutile and anatase, wherein the rutile/anatase ratio is 2:98 to 98:2,
**characterized in that**
- a silicon halide and a titanium halide, preferably titanium tetrachloride, are vaporized in such a ratio that the correspondingly composed silicon-titanium mixed oxide powder results, the vapours are transferred, mixed or separately, into a mixing chamber by means of a carrier gas,
- wherein the vaporization temperature is less than 180°C, and
- separately therefrom, hydrogen, primary air, which may optionally be enriched with oxygen and/or preheated, is transferred into the mixing chamber,
- then the mixture consisting of the silicon halide and titanium halide vapours, hydrogen and primary air is ignited in a burner and the flame is combusted into a reaction chamber which is closed off from the ambient air,
- secondary air is additionally introduced into the reaction chamber, wherein the primary air/secondary air ratio is between 10 and 0.25,
- the solids are then separated from the gaseous substances, and
- halide-containing substances are then very substantially removed from the solids by treatment with steam at temperatures of from 250 to 700°C.

2. Process according to Claim 1, **characterized in that** the vaporization temperature is less than 160°C.

3. Process according to Claims 1 or 2, **characterized in that** silicon tetrachloride, methyltrichlorosilane and/or trichlorosilane are used as silicon halides.

4. Process according to Claims 1 to 3, **characterized in that** the discharge velocity of the reaction mixture from the burner into the reaction space is between 10 and 80 ms.

5. Process according to Claims 1 to 4, **characterized in that** additionally up to 25 g of steam/m³ of primary air is introduced into the mixing chamber.

6. Flame-hydrolytically produced silicon-titanium mixed oxide powder obtainable by the process according to Claims 1 to 5.

7. Flame-hydrolytically produced silicon-titanium mixed oxide powder according to Claim 6, **characterized in that** the BET surface area is between 80 and 130 m²/g.

8. Flame-hydrolytically produced silicon-titanium mixed oxide powder according to Claims 6 or 7, **characterized in that** the chloride content is less than 0.5 wt.%.

9. Flame-hydrolytically produced silicon-titanium mixed oxide powder according to Claims 6 to 8, **characterized in that** the tamped density is in the range from 20 to 140 g/l.

10. Use of the flame-hydrolytically produced silicon-titanium mixed oxide powder according to Claims 6 to 9 in toner mixtures, in cosmetic preparations, in particular in sunscreen preparations, as a catalyst, as a catalyst support and as a photocatalyst.

## Revendications

1. Procédé pour la préparation d'une poudre d'oxyde mixte de silicium-titane qui est constituée par des agrégats de particules primaires et dans lequel
- les particules primaires sont constituées par du dioxyde de silicium amorphe, du dioxyde de titane cristallin ou un oxyde mixte de silicium-titane avec une proportion de dioxyde de silicium amorphe et une proportion cristalline de dioxyde de titane cristallin, les particules primaires d'oxyde mixte de silicium-titane étant prépondérantes,
- la poudre présente une surface BET entre 20 et 200 m²/g, une proportion de dioxyde de titane de 40-60% en poids, et un diffractogramme des rayons X qui présente les modèles de diffraction du rutile et de l'anatase, le rapport rutile/anatase étant de 2:98 à 98:2,
**caractérisé en ce qu'**on
- évapore un halogénure de silicium et un halogénure de titane, de préférence le tétrachlorure de titane, dans un rapport tel qu'il en résulte la poudre d'oxyde mixte de silicium-titane de composition correspondante, on transfère les vapeurs au moyen d'un gaz support, sous forme mélangée ou séparée, dans une chambre de mélange,
- la température d'évaporation étant inférieure à 180°C et
- transfère, de manière séparée, de l'hydrogène, de l'air primaire, qui peut le cas échéant être enrichi en oxygène et/ou préchauffé, dans la chambre de mélange,
- enflamme ensuite le mélange des vapeurs d'halogénure de silicium et d'halogénure de titane, d'hydrogène et d'air primaire dans un brûleur et on brûle la flamme dans une chambre de réaction fermée par rapport à l'air environnant,
- introduit de l'air secondaire supplémentaire dans la chambre de réaction, le rapport air primaire/air secondaire étant compris entre 10 et 0,25,
- sépare ensuite le solide des substances gazeuses, et
- libère ensuite dans une large mesure le solide de substances contenant des halogénures par un traitement à la vapeur d'eau à des températures de 250 à 700°C.

2. Procédé selon la revendication 1, **caractérisé en ce que** la température d'évaporation est inférieure à 160°C.

3. Procédé selon les revendications 1 ou 2, **caractérisé en ce qu'**on utilise comme halogénures de silicium le tétrachlorure de silicium, le méthyltrichlorosilane et/ou le trichlorosilane.

4. Procédé selon les revendications 1 à 3, **caractérisé en ce que** la vitesse d'évacuation du mélange réactionnel du brûleur dans l'espace de réaction est comprise entre 10 et 80 m/s.

5. Procédé selon les revendications 1 à 4, **caractérisé en ce qu'**on introduit en plus jusqu'à 25 g de vapeur d'eau/m³ d'air primaire dans la chambre de mélange.

6. Poudre mixte d'oxyde de silicium-titane préparée par hydrolyse à la flamme pouvant être obtenue selon le procédé selon les revendications 1 à 5.

7. Poudre mixte d'oxyde de silicium-titane préparée par hydrolyse à la flamme selon la revendication 6, **caractérisée en ce que** la surface BET est comprise entre 80 et 130 m²/g.

8. Poudre mixte d'oxyde de silicium-titane préparée par hydrolyse à la flamme selon les revendications 6 ou 7, **caractérisée en ce que** la teneur en chlorure est inférieure à 0,5% en poids.

9. Poudre mixte d'oxyde de silicium-titane préparée par hydrolyse à la flamme selon les revendications 6 à 8, **caractérisée en ce que** la densité tassée est de 20 à 140 g/l.

10. Utilisation de la poudre d'oxyde mixte de silicium-titane préparée par hydrolyse à la flamme selon les revendications 6 à 9 dans des mélanges pour toner, dans des compositions cosmétiques, en particulier dans les agents de protection solaire, comme catalyseur, support de catalyseur et photocatalyseur.
